# FASCICULE DE BREVET EUROPEEN

(11) **EP 0 481 843 B1**
(45) Date de publication et mention de la délivrance du brevet: **06.09.1995**
(21) Numéro de dépôt: 91402666.1
(22) Date de dépôt: 07.10.1991
(51) Int. Cl.: B64D 17/02

(54) **Dispositif pour piloter une voilure gonflable**
Steuereinrichtung für einen Gleitschirm
Control device for a gliding wing

(30) Priorité: 15.10.1990 FR 9013406
(43) Date de publication de la demande: 22.04.1992
(73) Titulaire: Darlet, Jean-Louis, F-97419 La Possession, Ile de la Réunion (FR)
(72) Inventeur: Darlet, Jean-Louis, F-97419 La Possession, Ile de la Réunion (FR)
(74) Mandataire: Wind, Jacques

(56) Documents cités:
- WO-A-89/07548
- FR-A- 2 408 522
- US-A- 4 865 274
- "Le Vol Libre", Hubert Aupetit, Editions Denoel, Paris 7e, 1989, pages 64, 68 et 69.

## Description

La présente invention se rapporte à un engin de vol à voile gonflable, de type parapente ou parachute.

A titre d'art antérieur est cité l'ouvrage de Hubert AUPETIT "Le Vol Libre", 1989, et en particulier, à l'appui de ce qui va suivre, les pages 64,68,69 de cet ouvrage.

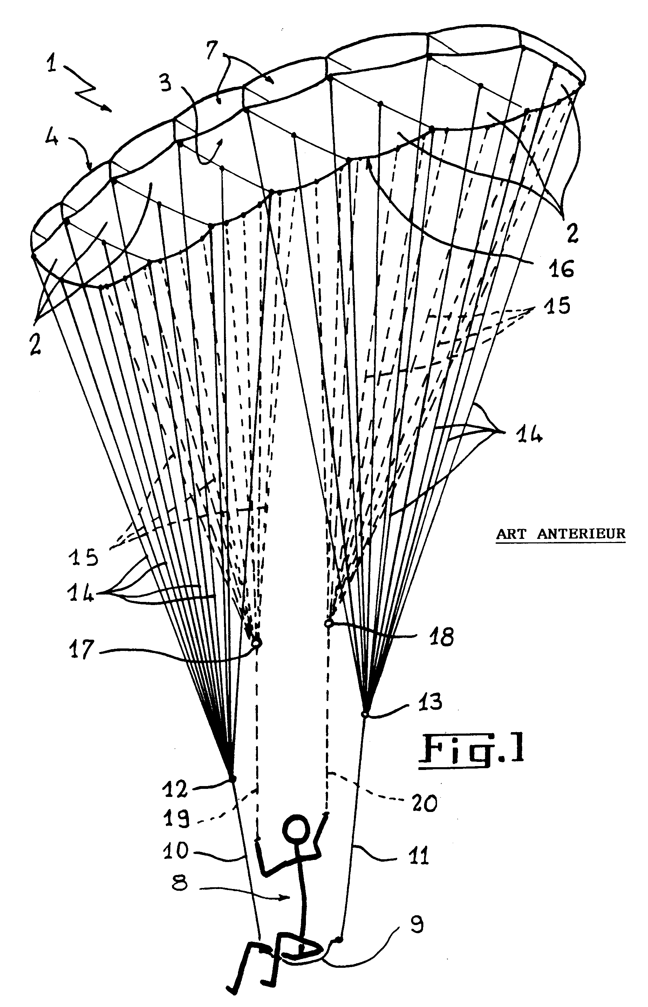

La figure 1 jointe est une vue, très schématique et en perspective, d'un parapente de l'art connu.

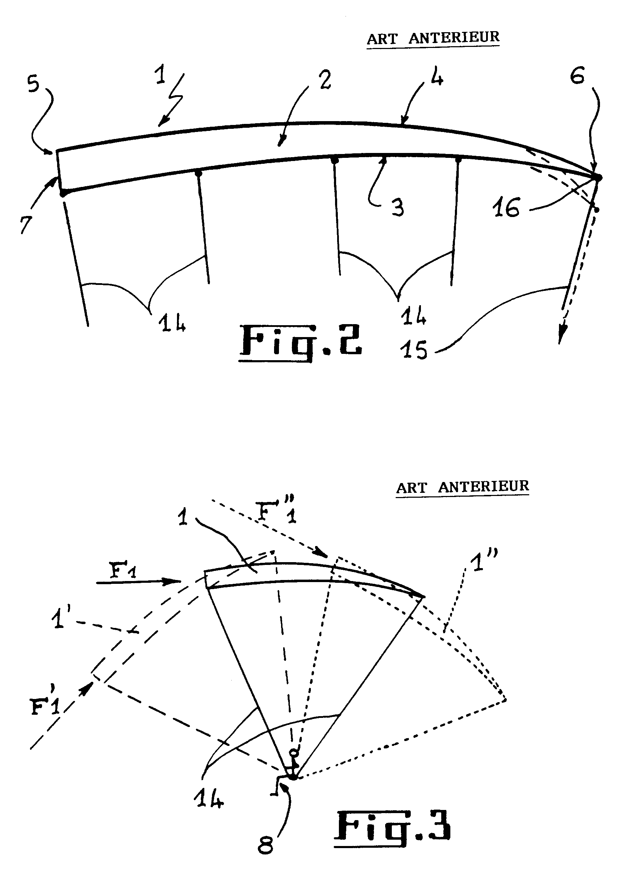

Il comporte une voile gonflable 1 qui est constituée d'une juxtaposition transversale de caissons adjacents 2, et qui forme l'aile portante. Le profil de cette aile 1, et donc de chacun de ces caissons 2, est un assez classique profil aérodynamique qui est grossièrement représenté sur la figure 2 jointe, cette dernière étant une coupe longitudinale de l'aile 1 et donc aussi d'un des caissons 2.

Il s'agit d'un profil aérodynamique assez classique d'aile portante d'aéronef, avec son intrados 3, son extrados 4, son bord d'attaque avant 5, et son bord de fuite effilé arrière 6.

Comme on le voit sur la figure 1, seul le bord avant 7 de chaque caisson 2 est ouvert, la partie restante du caisson étant remarquablement étanche.

En vol normal, cette ouverture avant 7 est située en un point de pression maximale d'air, de sorte que chaque caisson 2 est gonflé sous une très forte pression. Cette aile 1 est donc, en vol, une structure gonflée extrèmement rigide, cette rigidité étant équivalente, voire même quelquefois supérieure, à celle d'une aile d'avion.

Le pilote 8 est attaché sur une sellette 9 qui est suspendue, au moyen de deux filins 10, 11 appelés "élévateurs", à deux points de liaison respectifs 12, 13 qui sont les points de rencontre respectifs des deux faisceaux droite-gauche des suspentes 14 du parapente.

Ces suspentes 14 sont classiquement constituées d'une série de rangées longitudinales de filins de suspension qui sont attachés sous l'aile 1 et plus précisément sur les bords longitudinaux des caissons 2.

Tout ce qui vient d'être décrit s'applique bien-entendu aussi à un parachute, mais dans ce cas la sellette 9 est remplacée par un harnais.

Pour permettre au pilote 8 de diriger (et éventuellement de freiner) son parapente ou parachute, il est normalement prévu deux autres séries droite-gauche de suspentes 15, appelées "freins", qui sont fixées tout le long du bord arrière effilé 16 de l'aile gonflable 1.

Chaque moitié droite-gauche de cette lignée transversale de suspentes auxiliaires 15 se réunit respectivement vers le bas en deux points de liaison 17 et 18, et le pilote 8 tient dans chaque main un filin de commande 19, 20 fixé au point de liaison respectif 17 et 18.

Une traction effectuée par le pilote sur l'un et/ou l'autre des filins de commande 19 et 20 a, comme dessiné en pointillés sur la figure 2, pour effet de cabrer vers le bas tout ou partie de l'extrémité effilée 16 de l'aile 1, et donc d'engendrer un effet de freinage.

En tirant avec une même force les deux filins 19 et 20, le pilote freine son parapente ou parachute sans changer sa trajectoire. En revanche, s'il tire uniquement sur le filin 19 (ou s'il tire plus fort sur ce filin 19 que sur l'autre filin 20), il fait tourner son parapente vers sa droite, et, vice-versa s'il tire uniquement (ou plus fort) sur l'autre filin 20.

Ces parapentes ou parachutes de type connu présentent deux inconvénients :
. Un premier inconvénient qui est lié au mode de conduite basé sur le freinage. Comme on le voit sur la figure 2, ce freinage est réalisé par une déformation du bord de fuite 6 du profil de l'aile 1. Or, un tel profil est calculé de manière très pointue du point de vue aérodynamique, pour conférer une efficacité de portance maximale à cette aile 1. Le fait de la déformer partiellement pour manoeuvrer le parapente ou parachute entraîne donc une perte dommageable des performances de l'engin.
. Un second inconvénient, bien plus grave que le premier car touchant à la sécurité, qui est lié au fait que la sellette 9 du pilote 8 est reliée à la voilure 1, d'une façon quasi-rigide du point de vue inertie, par l'intermédiaire du suspentage 14 auquel elle est mécaniquement fixée par les points de liaison 12 et 13. Il en résulte un accouplement mécanique antinomique et préjudiciable entre le pilote 8 (et sa sellette 9) qui, dans la masse d'air, ne sont soumis qu'à des lois d'inertie pratiquement indépendantes de cette masse d'air, et la voilure gonflable 1 qui n'est elle-même soumise qu'aux lois de cette même masse d'air, de sorte que son profil 3, 4 va avoir tendance à épouser au mieux le flux de cette dernière.

Les effets dangereux qui résultent de cette antinomie sont schématisés sur la figure 3 jointe :
En traits pleins est dessiné sur cette figure la position "normale" du parapente lorsque le flux F1 de la masse d'air est horizontal : dans ce cas, il en est de même pour la voilure 1, et le pilote 8 est suspendu sous cette dernière en alignement avec la verticale.

Si alors la direction du flux de la masse d'air vient brusquement à changer pour adopter une direction F'1, la voilure 1 va immédiatement se déplacer, et donc piquer du nez vers l'avant selon 1', pour épouser au mieux cette nouvelle direction F'1 de la masse d'air. Il n'en est pas de même du pilote qui n'est soumis qu'à des lois d'inertie et qui va voir, si le mouvement de la masse d'air accentue sa rotation vers le haut, sa voilure 1' se replier sous lui avant que son inertie puisse le ramener sous cette voilure. S'il ne fait pas alors de manoeuvres rapides et intempestives pour redresser son parapente à temps, il vient tomber dans sa voilure, et c'est l'accident s'il n'arrive pas ensuite à se rattraper.

De même, si le flux de la masse d'air vient à contrario à se déplacer selon F''1, le pilote 8 voit sa voilure partir vers l'arrière selon 1'', et il est au minimum soumis à un balancement indésiré et dangereux.

Bien entendu, ces phénomènes peuvent être évités à l'avance par un pilote habile sachant les prévoir et piloter en conséquence son aile au moyen des freins. mais cette action constante sur les freins entraîne toujours une perte dommageable en performances.

Est également cité le brevet US N° 4.865.274 qui se rapporte au cas très particulier qu'est le parachute ascentionnel tracté, utilisé ici, **sans pilote**, pour trainer une charge qui est accrochée sous ce parachute tracté. celui-ci est équipé d'une commande automatique de stabilité en position de la voile gonflable par action différentielle sur des freins prévus classiquement sur le bord de fuite arrière de la voile gonflable et au niveau de chaque extrémité droite-gauche de ce bord de fuite : si un des filins de commandes de freins se raccourcit, l'autre se rallonge de manière automatiquement conjuguée, ce qui ramène la voile gonflable dans la ligne de tractage.

La présente invention vise à remédier à ces inconvénients. Elle se rapporte à cet effet à un engin de vol de type parapente ou parachute, comprenant une voilure gonflable sous laquelle est suspendu un pilote par l'intermédiaire de suspentes qui sont maintenues tendues par le poids de ce pilote, avec au moins un faisceau avant de suspentes qui est maintenu tendu selon au moins une rangée transversale de filins de tension inférieure et d' accrochage avant et au moins un faisceau arrière de suspentes qui est de façon similaire maintenu tendu selon au moins une rangée transversale de filins de tension inférieure et d'accrochage arrière, ce parapente ou parachute étant caractérisé :
. en ce que les extrémités inférieures de ces filins avant de tension dudit faisceau avant de suspentes sont fixées, de manière espacée et répartie, sur une barre transversale avant;
. en ce les extrémités inférieures desdits filins arrière de tension dudit faisceau arrière de suspentes sont de même façon fixées, de manière espacée et répartie, sur une barre transversale arrière;
. en ce que cette barre transversale arrière est maintenue en arrière de cette barre transversale avant par des traverses, l'ensemble constitué par ces barres transversales et ces traverses formant en conséquence un chassis qui tend lesdites suspentes;
. en ce que ce chassis supporte un point d'ancrage unique auquel est pendu librement le pilote;
. et en ce que sous ce chassis sont fixés des éléments de pilotage qui pendent à portée de mains du pilote, afin de pouvoir à loisir, en agissant sur ledit chassis par l'intermédiaire de ces éléments, modifier l' incidence de l'ensemble la voilure dans différents plans et guider ainsi en vol son parapente ou parachute.

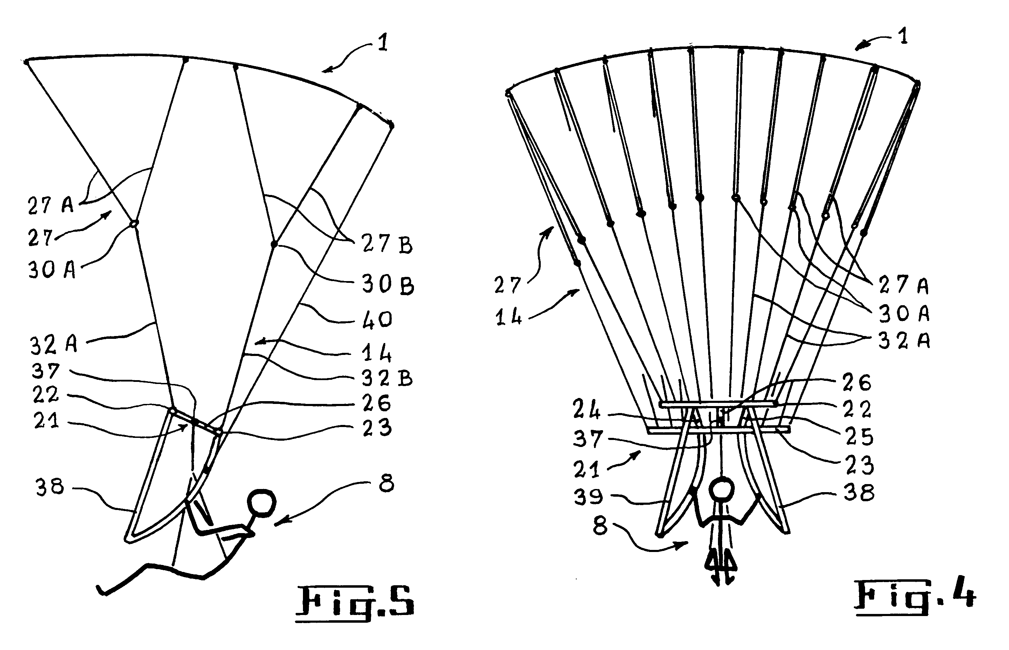

L'invention sera bien comprise, et ses avantages et autre caractéristiques ressortiront mieux, lors de la description suivante d'un exemple de réalisation d'un parapente conforme à cette invention, en référence au dessin schématique annexé dans lequel :
. Figure 4 est une vue de face de ce parapente en vol; et
. Figure 5 en est une vue latérale;

En se reportant à l'ensemble des figures 4 et 5, selon cette réalisation, le suspentage 14 qui relie la voilure gonflable 1 au pilote 8 n'est plus réuni en deux points 12, 13 auxquels est attachée la sellette 9.

Il est utilisé un chassis intermédiaire 21 qui tend les suspentes 14.

Le chassis 21 comporte, de manière sensiblement coplanaire, au moins une barre transversale avant 22, au moins une barre transversale arrière 23 qui est sensiblement parallèle à la barre 22, et des traverses de maintien d'écartement sous forme de barres 24, 25, 26, au nombre de trois dans l'exemple représenté.

Chaque rangée longitudinale de suspentes 27 est divisée en deux groupes :
. un groupe de suspentes "avant" 27A qui se réunissent en un point commun intermédiaire 30A pour finalement venir se fixer, via un filin de tension inférieure et d'accrochage avant 32A, en un point respectif propre de la barre transversale avant 22 ; et
. de même façon un groupe égal de suspentes "arrière" 27B 28B qui se réunissent pareillement au point 30B pour se fixer en des points d'attache propres sur la barre transversale arrière 23.

Les extrémités inférieures des filins de tension inférieurs et d'accrochage avant (...,32A,...) du faisceau avant de suspentes (...,27A,...) sont ainsi fixées, de manière espacée et répartie, tout le long de la barre transversale avant 22. L'espacement entre ces points de fixation inférieurs peut être régulier ou non.

De même façon, les extrémités inférieures des filins, tels que le filin référencé 32B, de tension inférieure et d'accrochage arrière du faisceau arrière de suspentes sont fixées, de manière espacée et répartie (régulièrement ou non), tout le long de la barre transversale arrière 23.

En outre, le pilote 8 est maintenant suspendu librement sous le chassis 21 et par l'intermédiaire d'un point d'ancrage unique 37.

Le pilote 8 est maintenant libre de se déplacer en fonction de ses lois d'inertie, de manière totalement indépendante de la voilure 1 qui elle-même reste alors totalement libre de suivre les lois de la masse d'air.

De plus, la conduite de l'engin ne s'effectue plus à l'aide de freins, mais par action du pilote sur le chassis 21. Cette action consiste à changer à loisir, au moyen de deux éléments de pilotage 38, 39, ici en forme d'arceaux en "V" à branche avant droite et à branche arrière cintrée avec connexité dirigée vers l'arrière à la manière de la lettre grècque "nu", l'orientation du chassis 21 dans divers plans pour répercuter, par le suspentage 14, ce changement d'orientation sur l'aile 1 et par suite lui conférer le mouvement souhaité, qu'il s'agisse effectivement d'un changement d'orientation ou qu'il s'agisse d'un freinage obtenu en cabrant la partie arrière de l'aile par action sur ce chassis 21.

A noter que ce dispositif n'exclut pas d'utiliser en outre une commande classique 40 de freinage indépendamment du chassis 21.

Comme il va de soi, l'invention n'est pas limitée à l'exemple de réalisation qui vient d'être décrit. Par exemple :
. Les barres transversales peuvent être cintrées, et présenter leur convexité vers le haut ou vers le bas. Elles peuvent aussi présenter des orientations vers l'avant ou vers l'arrière, le tout afin de se prèter au mieux à la géométrie particulière de chaque voilure.
. Les barres transversales peuvent être au nombre de deux ou plus, selon le mode de suspentage.
. Les longueurs respectives des barres transversales avant et arrière peuvent être différentes en fonction des effets recherchés.
. Les points d'attache des filins inférieurs des suspentes peuvent être régulièrement espacés ou suivre une autre loi propre à donner un effet particulier au pilotage et à la stabilité de la voilure.
. L'ensemble du chassis de pilotage de l'invention peut être pliable, avec des éléments démontables ou télescopiques afin de faciliter la mise en oeuvre.
. Le chassis de pilotage de l'invention peut être apte à recevoir une motorisation pour décollage sur roues, skis, flotteurs, etc, ou pour décollage à pied.

## Revendications

1. Engin de vol de type parapente ou parachute, comprenant une voilure gonflable (1) sous laquelle est suspendu un pilote (8) par l'intermédiaire de suspentes (14) qui sont maintenues tendues par le poids de ce pilote, avec au moins un faisceau avant (27A) de suspentes qui est maintenu tendu selon au moins une rangée transversale de filins de tension inférieure et d'accrochage avant (32A), et au moins un faisceau arrière de suspentes (27B) qui est de façon similaire maintenu tendu selon au moins une rangée transversale de filins de tension inférieure et d'accrochage arrière (32B), **caractérisé** :
. en ce que les extrémités inférieures de ces filins avant (32A) de tension dudit faisceau avant de suspentes sont fixées, de manière espacée et répartie, sur une barre transversale avant (22);
. en ce les extrémités inférieures desdits filins arrière (32B) de tension dudit faisceau arrière de suspentes sont de même façon fixées, de manière espacée et répartie, sur une barre transversale arrière (23);
. en ce que cette barre transversale arrière est maintenue en arrière de cette barre transversale avant par des traverses (24,25,26), l'ensemble constitué par ces barres transversales (22,23) et ces traverses (24,25,26) formant en conséquence un chassis (21) qui tend lesdites suspentes (14);
. en ce que ce chassis (21) supporte un point d'ancrage unique (37) auquel est pendu librement le pilote (8);
. et en ce que sous ce chassis (21) sont fixés des éléments de pilotage (38,39) qui pendent à portée de mains du pilote (8), afin de pouvoir à loisir, en agissant sur ledit chassis par l'intermédiaire de ces éléments, modifier l'incidence de l'ensemble la voilure (1) dans différents plans et guider ainsi en vol son parapente ou parachute.

2. Parapente ou parachute selon la revendication 1, caractérisé en ce que ce chassis (21) comporte en outre une ou plusieurs autres barres transversales intermédiaires.

3. Parapente ou parachute selon l'une des revendications 1 ou 2, caractérisé en ce que les barres transversales, respectivement avant (22) et arrière (23), sont de longueurs différentes.

4. Parapente ou parachute selon l'une des revendications 1 à 3, caractérisé en ce que lesdites barres transversales sont cintrées vers le haut ou vers le bas.

5. Parapente ou parachute selon l'une des revendications 1 à 4, caractérisé en ce que lesdites barres transversales présentent des orientations vers l'avant ou vers l'arrière.

6. Parapente ou parachute selon l'une des revendications 1 à 5, caractérisé en ce que ledit chassis (21) est apte à recevoir une motorisation.

## Claims

1. Flying machine of the hang-glider or parachute type, comprising an inflatable canopy (1) beneath which a pilot (8) is suspended via shroud lines (14) which are maintained taut by said pilot's weight, with at least one front bundle (27A) of lines which is maintained taut along at least one transverse row of front lower control lines (32A), and at least one rear bundle of lines (27B) which is similarly maintained taut along at least one transverse row of rear lower control ropes (32B), characterized:
. in that the lower ends of these front control ropes (32A) of said front bundle of lines are fixed, in spaced and distributed manner, on a front transverse bar (22);
. in that the lower ends of said rear control ropes (32B) of said rear bundle of lines are similarly fixed, in spaced and distributed manner, on a rear transverse bar (23);
. in that this rear transverse bar is maintained to the rear of this front transverse bar by cross-pieces (24, 25, 26), the assembly constituted by these transverse bars (22, 23) and these cross-pieces (24, 25, 26) consequently forming a frame (21) which tightens said shroud lines (14);
. in that this frame (21) supports a single anchoring point (37) from which the pilot (8) is freely hung;
. and in that, beneath this frame (21) are fixed control elements (38, 39) which hang within reach of the hands of the pilot (8), in order to be able, as desired, by acting on said frame via these elements, to modify the incidence of the canopy (1) assembly in different planes and thus guide his hang-glider or parachute in flight.

2. Hang-glider or parachute according to Claim 1, characterized in that this frame (21) further comprises one or more other intermediate transverse bars.

3. Hang-glider or parachute according to one of Claims 1 or 2, characterized in that the transverse bars, front (22) and rear (23) respectively, are of different lengths.

4. Hang-glider or parachute according to one of Claims 1 to 3, characterized in that said transverse bars are curved upwardly or downwardly.

5. Hang-glider or parachute according to one of Claims 1 to 4, characterized in that said transverse bars present forward or rearward orientations.

6. Hang-glider or parachute according to one of Claims 1 to 5, characterized in that said frame (21) is adapted to receive motorization means.

## Patentansprüche

1. Fluggerät in Form eines Gleitschirmes oder Fallschirms, mit einer Gleitkappe (1), unterhalb derer der Flieger (8) mittels Halteleinen (14) hängt, die durch sein Gewicht gestrafft werden, mit wenigstens einem vorderen Halteseil (27A), das in wenigstens einem Querbereich von vorderen und unteren Spann- und Halteseilen (32A) gestrafft wird und mit wenigstens einem hinteren Halteseil (27B), das in ähnlicher Weise in wenigstens einem Querbereich von hinteren und unteren Spann- und Halteseilen (32B) gestrafft wird, dadurch gekennzeichnet, daß
. die unteren Enden der vorderen Spannseile (32A) für die vorderen Halteseile im Abstand voneinander und entlang einer vorderen Querstange (22) an dieser befestigt sind,
. die unteren Enden der hinteren Spannseile (32B) für die hinteren Halteseile in gleicher Weise im Abstand voneinander und entlang einer hinteren Querstange (23) an dieser befestigt sind,
. die hintere Querstange hinter der vorderen Querstange mittels Streben (24, 25, 26) gehalten wird, so daß die durch die Querstangen (22, 23) und die Streben (24, 25, 26) gebildete Anordnung ein Traggestell (21) bildet, das die Halteleinen (14) strafft,
. daß das Traggestell (21) eine einzige Verankerungsstelle (37) trägt, an der der Flieger (8) frei aufgehängt ist,
. und daß unterhalb des Traggestells (21) Steuerteile (38, 39) befestigt sind, die im Griffbereich des Fliegers (8) aufgehängt sind, damit dieser durch beliebige Einwirkung auf das Traggestell mittels dieser Teile die Neigung der Anordnung zur Steuerung der Gleitkappe (1) verändern kann, in verschiedenen Ebenen, um dergestalt die Flugrichtung des Gleitschirmes oder Fallschirmes zu steuern.

2. Gleitschirm oder Fallschirm nach Anspruch 1, dadurch gekennzeichnet, daß das Traggestell (21) außerdem eine oder mehrere Zwischen-Querstangen aufweist.

3. Gleitschirm oder Fallschirm nach einem der Ansprüche 1 oder 2, dadurch gekennzeichnet, daß die beiden vorderen bzw. hinteren Querstangen (22, 23) unterschiedliche Längen aufweisen.

4. Gleitschirm oder Fallschirm nach einem der Ansprüche 1 bis 3, dadurch gekennzeichnet, daß die Querstangen nach oben oder unten hin gekrümmt sind.

5. Gleitschirm oder Fallschirm nach einem der Ansprüche 1 bis 4, dadurch gekennzeichnet, daß die Querstangen nach vorne oder nach hinten hin ausgerichtet sind.

6. Gleitschirm oder Fallschirm nach einem der Ansprüche 1 bis 5, dadurch gekennzeichnet, daß das Traggestell (21) zur Aufnahme eines motorischen Antriebs ausgestaltet ist.
